# EUROPÄISCHE PATENTSCHRIFT

(11) **EP 1 620 522 B1**
(45) Veröffentlichungstag und Bekanntmachung des Hinweises auf die Patenterteilung: **25.08.2010**
(21) Anmeldenummer: 04710337.9
(22) Anmeldetag: 12.02.2004
(51) Int. Cl.: C09D 5/16

(54) **VERFAHREN ZUR HERSTELLUNG EINER TEMPORÄREN, SELBSTREINIGENDEN BESCHICHTUNG AUF EINEM WASSERBENETZTEN BAUTEIL UND ANWENDUNG**
PROCESS FOR THE PRODUCTION OF A TEMPORARY, SELF-CLEANING COATING ON A WATER-WETTED COMPONENT AND USE
PROCÉDÉ POUR PRODUIRE UN REVÊTEMENT TEMPORAIRE, AUTONETTOYANT SUR UN COMPOSANT MOUILLÉ ET UTILISATION

(30) Priorität: 16.02.2003 DE 10307762
(43) Veröffentlichungstag der Anmeldung: 01.02.2006
(73) Patentinhaber: Stiftung Alfred-Wegener-Institut für Polar- und Meeresforschung, 27570 Bremerhaven (DE); Veritas DGC Inc., Houston, TX 77072 (US)
(72) Erfinder: BAUM, Christof, 27632 Dorum (DE); HAUGLAND, Tor, Houston, TX (US)
(74) Vertreter: Hoffmann, Heinz-Dietrich
(86) Internationale Anmeldenummer: PCT/DE2004/000299
(87) Internationale Veröffentlichungsnummer: WO 2004/072202

(56) Entgegenhaltungen:
- DE-A- 2 200 433
- DE-A- 10 117 945
- US-B1- 6 180 249
- Use of Penaten to control zebra mussel attachment (J.A. Magee et al.) XP002289000 in der Anmeldung erwähnt

## Beschreibung

Die Erfindung bezieht sich auf ein Verfahren zur Herstellung einer temporären, selbstreinigenden Beschichtung auf einem wasserbenetzten Bauteil, zum Beispiel einem Messkabel für Explorationszwecke, zu dessen Schutz gegen natürlichen Makrobewuchs durch Aufbringen einer viskoelastischen polymeren Beschichtungspaste, die lösungsmittelfrei und wasserabweisend ist, und auf eine Anwendung des Verfahrens.

Es ist ein bekanntes Problem, dass nach wenigen Tagen an wasserbenetzten Bauteilen Biofouling auftritt. Dabei wählen sich marine Organismen, wie beispielsweise Algen und Entenhalsmuscheln, meerestechnische Oberflächen zur Besiedlung aus. Die vermehrte Besiedlung dieser für den Menschen bedeutenden technischen Oberflächen führt meistens zum Verlust der Funktion, zur Erhöhung des Gewichtes und der Reibung. Erhöhte Reibung aufgrund der vergrößerten Oberfläche wirkt sich negativ auf die Stabilität der Konstruktion oder den Treibstoffverbrauch aus, der zur Fortbewegung der Konstruktion eingesetzt werden muss. Im Besonderen zerstören zusätzliche Reibung und Gewicht die physikalische Kontrolle über kilometerlange Messkabel, die für geophysikalische Beobachtungen im Zusammenhang mit der Ölsuche eingesetzt werden. An derartigen Messkabeln ("streamer"), insbesondere an kantigen Verbindungsstellen, lagern sich Entenhalsmuscheln ("barnacles") besonders bevorzugt in großen Mengen an. Vermutliche Ursachen hierfür sind die langsame Fortbewegung des Kabels in einer Wassertiefe von ungefähr 10 m und die dadurch verursachte turbulente Strömung im Kabelbereich, die Entenhalsmuscheln bei der Auswahl eines Anheftungsplatzes bevorzugen. In Folge des Bewuchses kann unter Umständen Ausrüstung beschädigt werden. Bewachsene Kabel zeigen ein schlechtes Signal-Rausch-Verhalten und bedingen deshalb eine schlechtere Datenqualität. So erzeugen beispielsweise Entenhalsmuscheln ein niederfrequentes Hintergrundsignal im Bereich von 10 Hz bis 70 Hz. Derzeit werden die Entenhalsmuscheln mechanisch von den Kabeln entfernt. Dies geschieht zum Teil von kleineren Booten aus. Die regelmäßige Reinigung erfordert Zeit, birgt Risiken für die ausführende Mannschaft und kann nur bei entsprechenden Witterungsbedingungen vorgenommen werden. Demgegenüber finden der Biofoulingprozess und der Anlagerungsprozess der Entenhalsmuscheln stetig statt. Dabei hängt der Grad des Foulings und der exponentielle Anstieg der Menge und Masse an Biofoulern im Wesentlichen von der Verfügbarkeit der Nährstoffe und der Temperatur ab. Allerdings wird Biofouling auch durch die Eigenschaften der bewachsenen Oberfläche bestimmt, die durch ihre Topographie, Benetzbarkeit und Viskoelastizität als entscheidende Kriterien gekennzeichnet ist.

Aus dem Stand der Technik ist es bekannt, Beschichtungen mit wasserabweisenden Eigenschaften zu nutzen, um wasserbenetzte Bauteile gegenüber Metall-Korrosion oder Gummi-Versprödung zu schützen. Wasserabweisende Eigenschaften von Antifouling-Beschichtungen weisen gegenüber Organismen eine geringere Anheftungstendenz auf. Oberflächen, die wasserabweisend sind, zeigen eine niedrige Oberflächenspannung gegenüber wässrigen Medien. Beschichtungen mit niedriger Oberflächenspannung sind seit mehr als 20 Jahren im Antifouling-Bereich im Einsatz. Obwohl die zugrundeliegenden Wirkmechanismen nicht vollständig verstanden sind, gibt es eine Vielzahl experimenteller Anhaltspunkte, dass Oberflächen mit niedriger Oberflächenspannung und gleichzeitiger Scherbelastung die permanente Ansiedlung von Organismen erschweren. Insbesondere sind Silikon- und Fluorocarbon- und Hydrocarbon-Harze bekannt für ihre niedrigen Oberflächenspannungen.

Bislang wurden für den Bewuchsschutz Silikonöle, vernetzte Silikonharze (vergleiche beispielsweise DE 693 01 620 T2**,** in der eine bewuchshemmende Silikonzusammensetzung aus einem Silikonharz mit einer Silikonflüssigkeit beschrieben wird) oder Silikonpartikel in vernetzten Harzen (vergleiche beispielsweise DE 196 35 824 A1**,** in der die Verwendung von vorvernetzten SilikonElastomer-Partikeln als Formulierungsbestandteil in Pulverlack-Zusammensetzungen beschrieben wird) eingesetzt. In den **technischen Informationen** von GE Research & Development Center (Technical Information Series, 97CRD062, May 1997, Class1) wird über die Vorteile von nichttoxischen Antifouling-Beschichtungen auf vernetzter Silikonbasis berichtet. Insbesondere wird der Einfluss von Füllstoffen, Vernetzungsdichte und Ölgehalt auf das Anheftverhalten von Entenhalsmuscheln untersucht. Es wurde ein hochvernetztes Polysiloxan-Polymer verwendet, dessen Schermodul über die Füllstoffe variierbar war. Festgestellt wird in dieser Information jedoch, dass die Füllstoffe einerseits keine Auswirkungen auf die Oberflächeneigenschaften der Beschichtung hatten, andererseits der Schermodul die Fouling-Anheftung beeinflusst. Dies jedoch mit der Aussage, dass niedrige Schermoduln eine größere Fouling-Akkumulation zur Folge haben. Die Ursache für dieses Verhalten wird nicht geklärt.

Permanent vernetzte Silikon-Beschichtungen sind als sogenannte "Fouling-Release Coatings" bekannt (vergleiche beispielsweise US 5.449.553**,** in der ein Zweischichtsystem mit Silikonharz oder Silikonpartikeln in vernetzten Harzen beschrieben wird). Ebenso wie die reinen Silikonöle weisen auch die chemisch vernetzten Silikon-Beschichtungen im getrockneten Zustand keine Verhaltensänderungen gegenüber veränderten Umgebungsbedingungen auf. Somit erfordert die Reinigung solcher Antifouling- Oberflächen den massiven Einsatz mechanischer Mitteln von außen (Wasserstrahl) oder eine schnelle, scherende Bewegung während der Bewegung eines Bauteiles durch das Wasser. Die Scherkräfte, die zur Reinigung solcher Oberflächen erzeugt werden müssen, sind abhängig von der Adhäsionskraft des Biofoulers, die meist im Bereich der mechanischen Belastbarkeit der Beschichtung von 10⁵ Pa liegt. Beschädigungen ("cracks") in der Beschichtung sind daher häufig bei der Reinigung. Zudem werden solche hohen Scherkräfte üblicherweise nur von schnellen Schiffen oder schnell bewegten Bauteilen erreicht, sodass derartige Antifouling-Coatings nicht ausreichend selbstreinigend sind. Weiterhin sind temporäre Beschichtungen auf der Basis von Wachsen oder Silikonprodukten für den Objektschutz, insbesondere von Autos und Schiffen, bekannt. Auch diese Beschichtungen weisen jedoch keinen Fließpunkt auf. Desweiteren enthalten die Mischungen giftige Stoffe und sind lösungsmittelhaltig. Somit sind sie umweltbelastend und benötigen Aushärtzeiten zum Abbinden. Der **Veröffentlichung** "Experience with Non-Fouling Coatings for Mussel Control" (A.C. Gross, Proc. of the Fourth Intern. Zebra Mussel Conf, Madison, Wisconsin, March 1994) ist ein Vergleich der oben genannten Öle und chemisch vernetzten Harze und insbesondere ein Vergleich einer weichen Silikongummifarbe als foul-release-coating auch mit einem Silikon-Schmierstoff mit dem Namen "Slipstream" (eine Herstellerangabe und physikalische Angaben oder Angaben über Inhaltsstoffe fehlen) zu entnehmen. Der getestete Silikon-Schmierstoff zeigt sich im Vergleich zu den öl-haltigen und vernetzten Silikonen jedoch unwirksam. Alle in den genanten Druckschriften aufgezeigten Antifouling-Beschichtungen zeigen jedoch unter variierenden Umgebungsbedingungen (schwächere oder stärkere Anströmung, mehr oder weniger angeheftete Fouling-Organismen) keine optimale Anpassung ihres Verhaltens. Eine ausreichende Effektivität derartiger Bewuchsschutzschichten kann somit bislang nicht erreicht werden.

In der **Veröffentlichung** "Penaten^{®} to control Zebra Mussel Attachment" (von J.A. Magee et al., abzurufen unter http://sgnis.org/publicat/96_19.htm, Stand 10.01.03), von der die vorliegende Erfindung als nächstliegendem Stand der Technik ausgeht, wird beschrieben, dass die lösungsmittelfreien Hautpflegemittel "Penaten^{®}-Creme" (Fa. Johnson and Johnson Co., Hallein, Deutschland) und "Desitin^{®}-Creme" (Fa. Pfizer Inc. New York, USA) als substratbildende Beschichtungspasten bei einem Test auf ihre Antifouling-Wirkung an einem wasserbenetzten Bauteil eine geringe Anheftungsrate für Zebra-Muscheln erzielten. Die Autoren führten diesen selbstreinigenden Effekt der komplexen Mischung aus verschiedenen Kohlenwasserstoffen und Arzneien mit Zinkoxid zum einen auf die Toxizität des antibakteriell wirksamen Zinkoxids (40% w/v) zurück. Desweiteren vermuteten die Autoren einen bewuchshemmenden Einfluss aufgrund der Kohlenwasserstoffe (hydrophobes Petrolatum und Petroleum-Destillate). Ein direkter Zusammenhang mit den wasserabweisenden und viskoelastischen Eigenschaften der Paste wurde jedoch nicht hergestellt.

Aus der DE 22 00 433 A ist es bekannt, den Rumpf eines noch im Trockendock liegenden Schiffes zum Schutz vor Beschädigung der bereits aufgebrachten Antifoulinganstriche sowie zum Schutz vor Trockenbewuchs und Korrosion mit einer Schicht aus reinem Paraffin (Petrolatum, Fließpunkt zwischen 15 und 110 Pa bei 20°C bis 5°C) zu versehen. Diese Wachsschicht wird beim Betrieb des Schiffes im Wasser auch ohne einen Bewuchs in kürzester Zeit durch das Wasser vollständig wieder abgetragen, damit die darunter liegenden Antifoulingschichten freigegeben werden. Selbst wenn nach einer gewissen Zeit dennoch ein gewisser Bewuchs auf der Wachsschicht entstehen sollte, sitzt dieser lediglich auf der äußersten Schicht und fällt bei der Fahrt zusammen mit dieser ab. Die Wachsschicht enthält aber keinen Füllstoff.

Die **Aufgabe** für die vorliegende Erfindung ist darin zu sehen, ein Verfahren zur Herstellung einer temporären, selbstreinigenden Beschichtung auf einem wasserbenetzten Bauteil - auch im Bauteilbetrieb - ohne den Einsatz von Umweltgiften anzugeben, die optimale Antifouling-Eigenschaften aufweist. Dabei sollen die Antifouling-Eigenschaften an die jeweiligen Umgebungsbedingungen für das zu schützende Bauteil anpassbar unter Erzielung einer großen Einsatzflexibilität sein. Das erfindungsgemäße Verfahren soll weiterhin einfach und damit kostengünstig sein. Weiterhin soll es ein Aufbringen ermöglichen, das mit einfachen Mitteln zuverlässig und wiederholbar durchführbar ist.

Die **Lösung** für diese Aufgabe ist gekennzeichnet durch Aufbringen einer Beschichtungspaste mit einer untoxischen Zusammensetzung und einem den Übergang vom festen zum fließenden Zustand festlegenden eingestellten Fließpunkt, der 5 Pa bis 2000 Pa größer als die Wandschubspannung des mit der Beschichtungspaste versehenen Bauteils in unbewachsenem Zustand ist, wobei die Einstellung des Fließpunkts in Abhängigkeit von den hydrodynamischen und biologischen Umgebungsbedingungen für das Bauteil durch die Wahl der Zusammensetzungsbasis und durch deren homogene Vermischung mit scherverzähenden Füllstoffen erfolgt. Vorteilhafte Weiterbildungen der Erfindung sind den Unteransprüchen zu entnehmen, die nachfolgend im Zusammenhang mit der Erfindung näher erläutert werden.

Bereits weiter oben wurde ausgeführt, dass Biofouling auch durch die Eigenschaften der bewachsenen Oberfläche bestimmt wird, die durch ihre Topographie, Benetzbarkeit und Viskoelastizität als entscheidende Kriterien gekennzeichnet ist. Es ist bisher zwar nicht bekannt, aus welchem Grund die Viskoelastizität einer Beschichtung auf das Biofouling Einfluss nimmt. Vergleicht man allerdings biologische Oberflächen mit geringem Aufwuchs miteinander, so fällt auf, dass - wie bei Fischen, Delfinen oder Tangen zu finden - teils weiche, teils hoch elastische, aggregierte, teils wasserlösliche, oder quellbare, thermisch reversibel oder chemisch vernetzte Schleime und Gele von den Körperoberflächen ausgebildet werden. Obwohl die Rheologie (Wissenschaft von der Deformation und dem Fließen der Stoffe) der biologischen Körperbedeckung mehr als einem Anspruch genügen muss, weisen viele dieser biologischen Schutzschichten einen Fließpunkt auf. Gezielte rheologische Untersuchungen an der Delfinhaut zur Bestimmung der Viskoelastizität gelbildender Komponenten zeigen, dass biologische Systeme durch Gelbildung sogar hohe Elastizitäten erreichen können, gekennzeichnet durch einen elastischen Schermodul oder auch Fließpunkt im Bereich von bis zu 10000 Pa. Oberhalb einer kritischen Belastungsgrenze kommt es zur Zerstörung der Struktur. Dieses Verhalten ist auch von Polymeren und Polymer-Mischungen bekannt. Da ein physikalisches Prinzip für Antifoulingstoffe nur verwendet werden kann, wenn der entscheidende rheologische Faktor bekannt ist, wurden im Rahmen der vorliegenden Erfindung entsprechende Untersuchungen durchgeführt. Diese Versuche zeigten unter Verwendung technischer Polymere als biomimetische Materialien, dass Beschichtungen mit einem effizienten Bewuchsschutz immer einen Fließpunkt, der zusammen mit der Viskosität das viskoelastische Verhalten eines Materials beschreibt, aufweisen müssen. Zudem kann nur dann ein Bewuchsschutz erfolgen, wenn der Fließpunkt der Beschichtung im Bereich der Wandschubspannung der Testoberfläche liegt. Dieses Wissen hat es nun ermöglicht, ein Verfahren zur Erzeugung einer optimal wirksamen und an die jeweiligen Umgebungsbedingungen anpassbaren Beschichtung aus einer Beschichtungspaste als Bewuchsschutz auf einer fließ-mechanischen Basis zu entwickeln. Die Benetzbarkeit der Beschichtungspaste ist gering gegenüber dem Netzmittel Wasser. Im Meerwasser ist die Paste gekennzeichnet durch Hydrophobie.

Die mit dem erfindungsgemäßen Verfahren hergestellte Beschichtung aus einer Beschichtungspaste ahmt die viskoelastische Komponente biologischer Körperbedeckungen mit technischen Materialien nach. Im Sinn einer technisch anwendbaren Beschichtung ist sie neben ihrem wasserabweisenden Charakter insbesondere gekennzeichnet durch einen ausgeprägten und charakteristischen Fließpunkt ihrer Viskoelastizität. Somit steht die mit der Erfindung erzeugbare Beschichtung ohne Verwendung von umweltbelastenden Giften den Bedürfnissen, die makroskopische Fouling-Organismen an Haftuntergründe stellen, konträr entgegen. Der Fließpunkt definiert den Übergang zwischen dem elastischen Verhalten der Beschichtungspaste als Feststoff und dem viskosen Verhalten der Beschichtungspaste als Fluid in Abhängigkeit von der auftretenden, bekannten Wandschubspannung auf der Oberfläche des zu schützenden Bauteils. Der Erfindung liegt deshalb ein physikalisches Prinzip zur Bewuchsbeseitigung zugrunde, das gleichsam auf der "rheologischen Schaltwirkung" des mit der Beschichtung gebildeten Besiedlungssubstrats basiert. Der Übergang vom festen zum fließenden Zustand ist das maßgebende Kriterium für eine erfolgreiche Beseitigung von angeheftetem Makrobewuchs. Durch diese Materialeigenschaft wird gewährleistet, dass die Beschichtungspaste sich unterhalb ihres Fließpunktes wie ein viskoelastischer Festkörper verhält und an der Konstruktion sicher haftet. Durch eine auftretende geringe mechanische Belastung (z.B. durch das Gewicht von sich anheftenden Fouling-Organismen) wird der individuell eingestellte Fließpunkt der Beschichtungspaste jedoch überschritten. Die Beschichtungspaste wird beweglicher, verliert die Eigenschaft eines tragfähigen Untergrundes und wird forminkonsistent. Die mechanischen Belastungen, die bei dieser Selbstreinigung aufgebaut werden, erzeugen die Bewuchsorganismen durch die Zunahme an Reibung und Eigengewicht selbst. Die Belastungen werden außerdem durch die Bewegung des Bauteiles in der Wasserströmung verstärkt. Im Gegensatz zu den bekannten Beschichtungen auf der Basis von Silikonölen oder vernetzten Silikon-Kunststoffen, die keinen definierten Fließpunkt und damit keine einstellbare rheologische Schaltfunktion zeigen (Silikonöle verhalten sich immer als Fluid, Silikon-Kunststoffe immer als Festkörper), ist die Festigkeit der aufgebrachten unvernetzten Beschichtungspaste somit mit der Wandschubspannung unter Normalbetrieb verknüpft. Es ist deshalb von Vorteil, den Fließpunkt der Beschichtungspaste gezielt so zu wählen, dass bereits eine kleine Zunahme an Gewichts- oder Scherbelastung zu einer Bewegung der Paste führt.

Das erfindungsgemäße Verfahren erzeugt beim Auftragen eine Beschichtung mit einer glatten Oberfläche, die selbstglättend unter Scherbelastung oberhalb ihres Fließpunktes ist. Die Beschichtung wirkt sich deshalb trotz guter Selbstreinigungseigenschaften reibungsmindernd auf die zu schützende Konstruktion im unbewachsenen Zustand aus, wenn diese bewegt wird. Im bewachsenen Zustand stellt die Beschichtungspaste eine Verlustschicht dar. Die Haltbarkeit der mit der Beschichtungspaste gebildeten Beschichtung kann nach Bedarf auf Tage oder Monate individuell eingestellt werden und hängt von der mechanischen Belastung der Beschichtung ab. Für geophysikalische Anwendungen kann beispielsweise eine Auslegung auf zwei Monate erfolgen.

Die vorliegende Erfindung ermöglicht somit beispielsweise eine Beschichtung, die meerwasserbenetzte Oberflächen vor natürlichem Bewuchs schützt. Dadurch kann die permanente Anheftung von Organismen wie Entenhalsmuscheln an Hydrophonkabeln, den Stützen von Ölplattformen und Schiffsrümpfen wirksam und effizient verhindert werden. Erstmals ist durch die mit der Erfindung herstellbare Beschichtung mit ihrer geringen Härte möglich, auch langsamere Schiffe und langsam bewegte Bauteile (z.B. Messkabel) gegen störenden Bewuchs zu schützen.

Die mit der Erfindung herstellbare Beschichtung ist gekennzeichnet durch einen charakteristischen und ausgeprägten Fließpunkt der eingesetzten Beschichtungspaste. Viele aus dem Stand der Technik bekannte Pasten weisen auch einen Fließpunkt auf. Die bekannten Pasten werden jedoch nicht als Beschichtungspasten sondern als Dichtmassen gegen ein- und ausdringende, wässrige oder gasförmige Medien verwendet (z.B. Vakuumfett der Firma Dow Corning). Aufgrund ihrer Steifigkeit bleiben derartige Pasten in den Lücken zwischen den Bauteilen aus z.B angeschliffenen Gläsern und gewährleisten den druckdichten Abschluss gegenüber dem Stoffaustausch zwischen innerem und äußerem Milieu. Temperaturbeständige Silikon-Pasten sind als Gleitmittel und damit zur Schmierung zwischen beweglichen Bauteilen im Gebrauch. Die Fließfähigkeit von Pasten ermöglicht allgemein deren Materialverteilung zwischen beweglichen Bauteilen. Auch im marinen Bereich werden Pasten zur Schmierung und Abdichtung verwendet (vergleiche beispielsweise das Produkt "Orca Grease" der Fa. Henleys Propellers& Marine Ltd, Glenfield, Neuseeland, **Prospekt** abrufbar unter http://www.henleyspropellers.com/orca_grease.htm, Stand 10.01.2003). Im Gegensatz zu der bei der Erfindung eingesetzten Beschichtungspaste ist die Rheologie dieser bekannten Pasten jedoch ausschließlich auf das Schmieren und Dichten eingestellt und nicht auf eine Ausbildung als Beschichtungspaste zur Bildung einer Beschichtung gegen natürlichen Makrobewuchs.

Der Fließpunkt der bei der Erfindung eingesetzten Beschichtungspaste ist gekennzeichnet durch einen die hydrodynamischen und biologischen Umgebungsbedingungen für das Bauteil berücksichtigenden einstellbaren Fließpunkt, der 5 Pa bis 2000 Pa oberhalb der Wandschubspannung des zu schützenden, mit der Beschichtungspaste versehenen Bauteils in unbewachsenem Zustand liegt. Durch diese Einstellung geringfügig oberhalb der unbelasteten Wandschubspannung ist sicher gewährleistet, dass die Beschichtungspaste im unbewachsenem Zustand zwar eine feste Schicht bildet, ein Anheften von marinen Organismen makroskopischer Größe durch Verflüssigung jedoch verhindert. Versuche auf See haben ergeben, dass dort vorwiegend solche Makro-Organismen auftreten, die gemäß einer Erfindungsfortführung den Einsatz einer Beschichtungspaste mit einem Fließpunkt erforderlich macht, der 5 Pa bis 200 Pa oberhalb der Wandschubspannung des zu schützenden, mit der Beschichtungspaste versehenen Bauteils in unbewachsenem Zustand liegt. Ziel der mit der Erfindung herstellbaren Beschichtung ist die Abscherung von sich anheftenden Bewuchsorganismen. In diesem Fall soll die Beschichtung als Verlustschicht wirken. Um aber einen Abtrag der Schicht bereits unter reinen Strömungsverhältnissen mit höheren auftretenden Wandschubspannungen, beispielsweise bei größeren Unterwasserkonstruktionen, die größeren Schwankungen unterliegen, oder bei generell rauerer See, zu verhindern, können auch Beschichtungspasten mit höherliegenden Fließpunkten bis zu 2000 Pa zum Einsatz gelangen. Eine Anheftung von Bewuchsorganismen unter diesen erschwerten Umgebungsbedingungen kann dann trotzdem mit der mit der Erfindung herstellbaren Beschichtung sicher verhindert werden. Weiterhin kann die Zusammensetzung der bei der Erfindung einzusetzenden Beschichtungspaste vorteilhaft gekennzeichnet sein durch Silikon, Fluorocarbon oder Hydrocarbon als Zusammensetzungsbasis. Alle Stoffe sind ungiftig und zeigen geeignete Eigenschaften für ihren Einsatz. Polymerpasten mit Fluorocarbon sind jedoch handelsüblich nicht ohne weiteres beziehbar, wohingegen Silikonpasten einfach und preiswert zu beziehen sind. Sie sind chemisch inert, werden nicht aufgenommen und zeigen keine negativen Wechselwirkungen mit vitalen biologischen Prozessen. Insbesondere unterliegen Silikone nicht dem schnellen Abbau durch Pilze und erzielen deshalb eine längere Schutzwirkung. Die Beimengung von antibakteriell wirksamem Zinkoxid ist deshalb nicht notwendig und schont die Umwelt. Die individuelle Einstellung des Fließpunkts erfolgt durch die Wahl der Zusammensetzungsbasis der Paste (flüssiges Öl oder feste Pastengrundlage) und durch deren homogene Vermischung mit scherverzähenden Füllstoffen. Vorteilhaft eignet sich insbesondere Silikonöl als flüssige Zusammensetzungsbasis. Durch Zugabe von scherverzähenden Füllstoffen (Additive) kann dieses in den pastösen Zustand überführt werden. Beim bekannten Einsatz von reinen Silikonölen ist der Materialverlust relativ groß, sodass die Schutzdauer verringert ist. Silikonöle können jedoch durch Vermengung mit scherverzähenden Partikeln und Pasten in geeignete Beschichtungspasten mit einem Fließpunkt überführt werden. Weiterhin können Hydrocarbone als Zusammensetzungsbasis verwendet werden. Besonders geeignet ist Petrolatum, das die Basis zur Herstellung von Vaseline bildet. Hydrocarbone sind ungiftig und leichter zu entfernen als Silikone.

Bei einer flüssigen Zusammensetzungsbasis kann zur individuellen Einstellung des Fließpunktes der bei der Erfindung einzusetzenden Beschichtungspaste nach einer weiteren Fortführung der Erfindung vorteilhaft eine Vermischung der Zusammensetzungsbasis mit Silika-, Metall- oder Metalloxid-Partikeln oder Partikeln oder Fasern aus biologischen Gerüstbausteinen, beispielsweise Zellulosepartikel oder -fasern, als scherverzähendem Füllstoff erfolgen. Der Gehalt an scherverzähendem Material ist nicht beschränkt, sondern richtet sich nach der Höhe des Fließpunktes, der nur geringfügig oberhalb der Wandschubspannung liegt, die an dem zu schützenden, mit der Beschichtungspaste versehenen Bauteil anliegt. Die Form und Größe der scherverzähenden Materialien ist ebenfalls nicht beschränkt, sondern richtet sich nach der Größe der Bewuchsorganismen. Einzelne Kompositionen sind dem speziellen Beschreibungsteil zu entnehmen.

Nach einer weiteren Erfindungsausgestaltung kann eine Beimengung von formgebenden Partikeln in die Beschichtungspaste erfolgen. Dadurch ist ihre Oberflächentopographie nicht nur makroskopisch (Anpassung an den Verlauf des Untergrundes durch weiche Konsistenz) sondern auch mikroskopisch variabel. Die Pastenoberfläche kann somit nach Bedarf durch Beimengen von formgebenden Partikeln verraut werden. Die Beimengung von Füllstoffen zielt auf eine Verringerung der Kontaktflächen zwischen Biofouler und zu schützender Oberfläche. Die Füllstoffe werden bevorzugt in der Paste homogen durch mechanische Mischung verteilt. Es ist bekannt, dass geringe Rauigkeiten im Nanobereich besonders gut Algen und Bakterien von der Ansiedlung an meerestechnische Produkte verhindern können. Solche hydrodynamischen Oberflächen können durch die Beimengen von strukturgebenden Nano- oder Mikropartikeln zu herkömmlichen Bindemitteln hergestellt werden (vergleiche DE 101 17 945 A1**).** Die Beschichtungspaste auf Silikonbasis, die bei Erfindung eingesetzt werden kann, ist für eine derartige Mischung geeignet, denn zur Mischung ist lediglich ein zusätzlicher Homogenisierungsschritt notwendig. Zusammenfassend gesehen ist die Beschichtungspaste unter Belastung forminkonsistent, wasserabweisend und weich. Diese Eigenschaften der Paste sind den Vorlieben, die viele marine Organismen, insbesondere Entenhalsmuscheln, an ihren Besiedlungsuntergrund stellen, gegenläufig. Damit kann die bei der Erfindung eingesetzte Beschichtungspaste eine optimale Effizienz bei der Vermeidung von marinem Bewuchs auf Unterwasserflächen erreichen. Zur Erzeugung einer hydrodynamischen Oberfläche ist es darüber hinaus gemäß einer nächsten Erfindungsausgestaltung vorteilhaft, wenn eine Beschichtungsstärke gewählt wird, die die Höhe der Oberflächenrauigkeit und der mechanischen Belastung des zu beschichteten Bauteils, die angestrebte Lebensdauer der Beschichtung und/oder den Bewuchsdruck berücksichtigt. Somit kann die selbstglättende Beschichtung auch gezielt zum Ausgleich von Oberflächenrauigkeit verwendet werden. Da die Beschichtung im belasteten Zustand eine Verbrauchsschicht ist, kann über die gewählte Schichtstärke die Standzeit der Beschichtung eingestellt werden. Bevorzugt kann es sich hierbei um eine Beschichtungsstärke zwischen 0,02 mm bis 5 mm handeln. Die Beschichtung ist wirksam auf festen und flexiblen Untergründen und arbeitet in einem Temperaturbereich zwischen -20°C und 400 °C.

Die bei der Erfindung eingesetzte weiche Beschichtungspaste verformt sich auf flexiblen Untergründen (z.B. beweglichen Messkabeln) und kann so optimal aufgebracht werden. Die Herstellung einer Beschichtung als Besiedlungssubstrat ist einfach herzustellen, aufzurauen und im Bedarfsfall auch einfach mechanisch oder chemisch wieder zu entfernen. Die Maßnahme ist kostengünstig und auch von Laien anzuwenden. Eine Wiederholung des Beschichtungsvorganges ist jederzeit möglich. Der Kontakt ist für Menschen unbedenklich und stellt kein Risiko für die marine Umwelt dar. Die Beschichtungspaste enthält keine Lösungsmittel und ist selbst nicht flammbar. Die Beschichtung ist nach Auftrag direkt gebrauchsfertig. Eine Wartezeit, in der Lösungsmittel verdampft oder ein Vernetzungsprozess stattfindet, entfällt. Der Einsatz der Beschichtungspaste auf See ist sicher und unkompliziert und deshalb von Vorteil. Ein bevorzugtes Verfahren zur Herstellung der Beschichtung ist gekennzeichnet durch einen ersten Beschichtungsvorgang mittels Aufpolieren oder Aufsprühen der Beschichtungspaste auf das zu schützende Bauteil im trockenen und sauberen Zustand und im Bedarfsfall durch weitere oder erneute Beschichtungsvorgänge des vorbeschichteten Bauteils unter Wasser. Zum Aufpolieren können Tücher oder Bürsten verwendet werden. Vorteilhaft ist insbesondere eine Beschichtungsvorrichtung mit gleitenden, vibrierenden oder rotierenden Elementen oder einer Kombination davon. Zur Vermeidung von Wiederholungen wird bezüglich weiterer Einzelheiten auf den speziellen Beschreibungsteil verwiesen. Es ist ein Vorteil der bei der Erfindung eingesetzten Beschichtungspaste mit Fließpunkt, dass ein erneuter Auftrag der Paste möglich ist. Dies ist bei den etablierten Foul-Release-Beschichtungen nicht möglich. Es ist ebenso ein Vorteil gegenüber permanenten Beschichtungen, dass die Paste gegebenenfalls mit Hilfe mechanischer Kräfte oberhalb des Fließpunkts oder durch den Einsatz von Tensiden oder Seifen vom Bauteil entfernt werden kann. Da die Paste nur bei Bewuchs eine Verlustschicht darstellt, besteht außerdem die Möglichkeit, überschüssiges Material nach Beendigung des Einsatzes rückzugewinnen, so dass ein Stoffkreislauf realisiert werden kann. Dieser Vorteil ist bei Silikonölen oder vernetzten Harzen nicht gegeben.

**Ausbildungsformen der Erfindung** werden nachfolgend anhand der schematischen Figuren näher erläutert. Dabei zeigt :
- **Figur 1**: ein mit Entenhalsmuscheln bewachsenes Messkabel,
- **Figur 2..5**: Belastungseigenschaften verschiedener Beschichtungspasten auf Silikonbasis,
- **Figur 6**: ein mit Beschichtungspaste versehenes Messkabel
- **Figur 7**: das mechanische Spektrum einer Beschichtungspaste auf Silikonbasis und
- **Figur 8**: eine Beschichtungsvorrichtung.

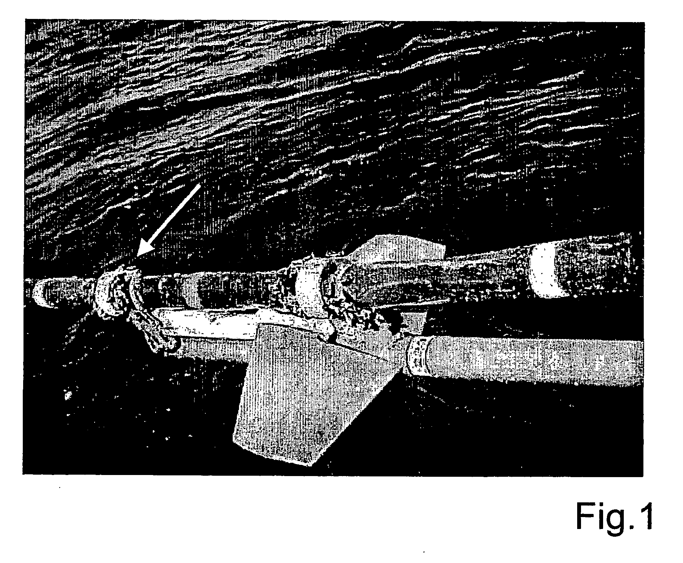

Die Figur 1 zeigt ein Foto von einem unbehandelten Messkabel (Streamer) für Explorationszwecke. Deutlich ist zu erkennen, dass die Befestigungsmanschetten (Pfeil) mit Entenhalsmuscheln bewachsen sind.

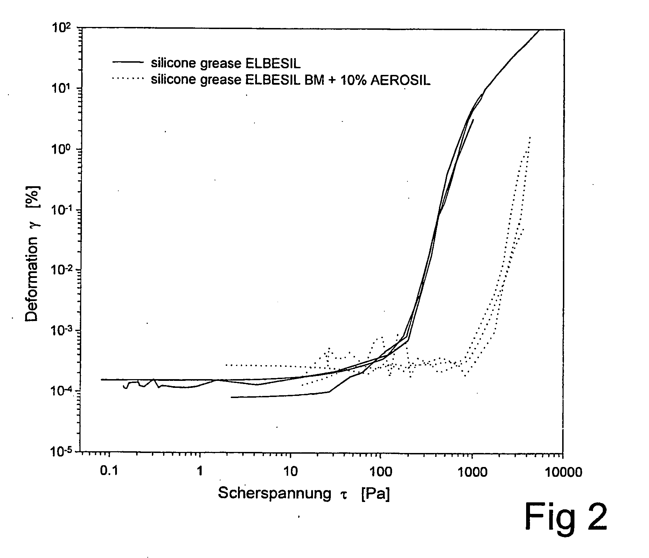

Die Beschichtung auf der Basis der bei der Erfindung eingesetzten Beschichtungspaste ist gekennzeichnet durch einen Fließpunkt **(****Figuren 2 bis 5****).** Der Fließpunkt der Beschichtungspasten ist geringfügig höher als die Wandschubspannung (5 Pa bis 2000 Pa, bevorzugt 5 Pa bis 200 Pa), die auf das unbewachsene, mit der Beschichtungspaste versehene Bauteil einwirkt. Der Fließpunkt ist jedoch niedriger als die Wandschubspannung, die auf das bewachsene, mit der Beschichtungspaste versehene Bauteil einwirkt. Die Diagramme in den **Figuren 2 bis 5** zeigen im doppelt-logarithmischen Maßstab die Belastungseigenschaften verschiedener bei der Erfindung einsetzbaren Beschichtungspasten auf Silikonbasis. Aufgetragen ist die Deformation y [%] über der Scherspannung τ [Pa]. Die Kurven wurden mit einem spannungskontrollierten Rheometer aufgenommen (Haake RS 150, Kegel-Platte-Geometrie, Kegeldurchmesser 35 mm, Öffnungswinkel 1°, Messtemperatur T = 20 C°). Der jeweilige Fließpunkt der getesteten Beschichtungspasten erscheint als Knick in der Messkurve. Unterhalb des Fließpunktes verhält sich die Beschichtungspaste wie ein viskoelastischer Festkörper, oberhalb des Fließpunktes wie ein viskoelastisches Fluid.

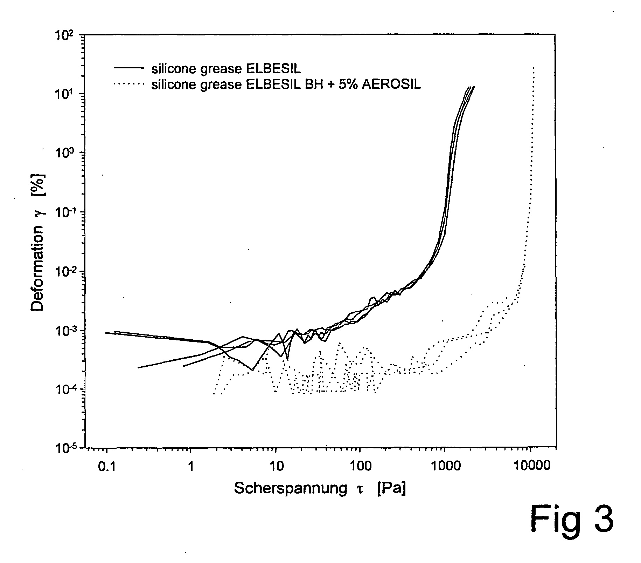

Eine Mischung einer weichen Silikonpaste (Elbesil BM, Fa. Böwing, Deutschland) mit 10% (w/w) hydrophoben Silika-Nano-Partikeln (12 nm Partikelgröße, Aerosil R974, Fa. Degussa, Deutschland) führte zu einem deutlichen Anstieg des Fließpunktes **(****Figur 2****).** Das gleiche Resultat wurde erhalten bei einer Mischung einer härteren Silikonpaste (Elbesil BH, Fa. Böwing, Deutschland) mit 5% (w/w) hydrophilen Silika-Nano-Partikeln (12 nm Partikelgröße, Aerosil 200, Fa. Degussa, Deutschland) **(****Figur 3****).**

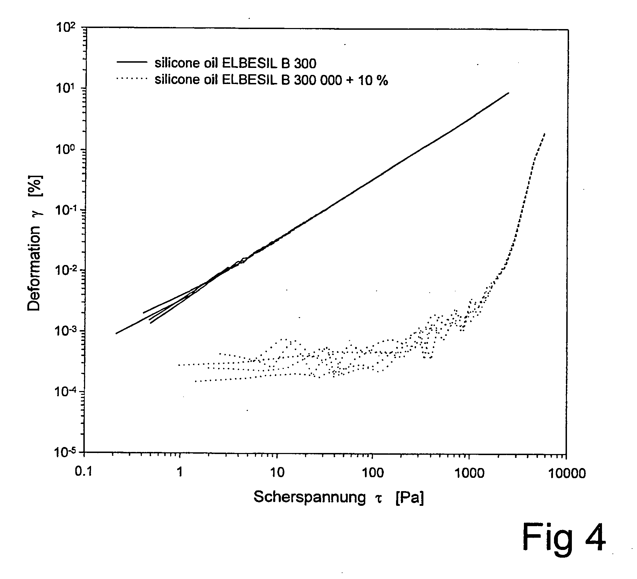

Im Gegensatz zu den Beschichtungspasten zeigte das reine Silikonöl (Elbesil B 300 000, Böwing, Deutschland) keinen Fließpunkt **(****Figur 4** **oben).** Ein Fließpunkt konnte jedoch über die Beimischung von 10% (w/w) hydrophilen Nano-Partikeln (12 nm Partikelgröße, Aerosil 200, Fa. Degussa, Germany) zum Silikonöl induziert werden **(****Figur 4** **unten).**

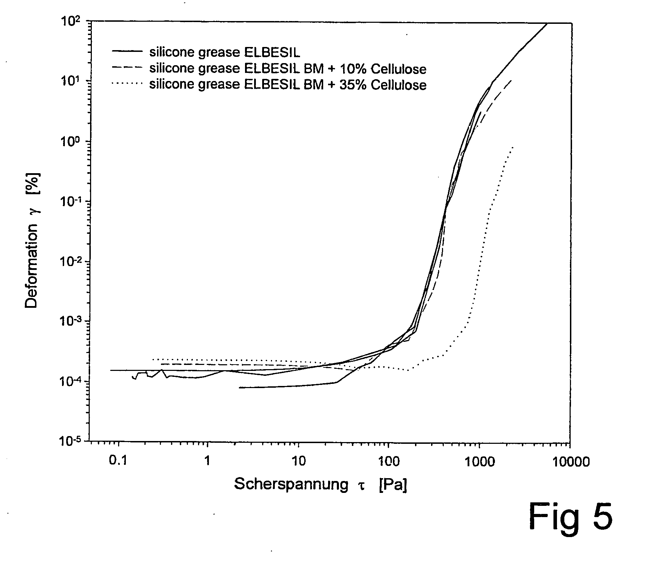

Eine Mischung aus der weichen Silikonpaste (Elbesil BM, Fa. Böwing, Deutschland) und nano-porigen Zellulose-Mikro-Partikeln (nominale Porengröße 100-300 nm, Partikelgröße 20 µm, Fa. Fluka, Deutschland) zeigte eine Änderung des Fließpunktes in Abhängigkeit von der Konzentration der Additive **(****Figur 5****).** Die Beimengung von 35% Füllstoff resultierte in einer Erhöhung des Fließpunktes um drei Größenordnungen im Gegensatz zur Mischung mit 10% Füllstoff oder einer Paste ohne Füllstoff. Die Mischung mit 35% Füllstoff zeigte eine raue Oberfläche.

Die durchgeführten rheologischen Charakterisierungen von Silikonölen und Silikonpasten mit rheologisch wirksamen Additiven zeigen, dass durch das Beimengen von partikulären Additiven Fließpunkte erreicht werden können, die zwischen 200 und 7000 Pa liegen. Somit kann gezielt ein rheologisches Schaltverhalten bei der bei der Erfindung eingesetzten Beschichtungspaste herbeigeführt werden.

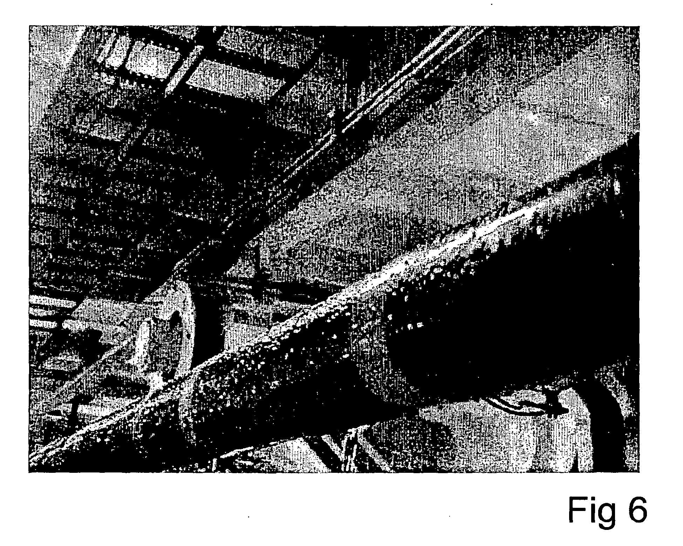

Die **Figur 6** zeigt das Aussehen einer mit Silikonpaste nach der Erfindung hergestellten Beschichtung auf einem Streamer-Messkabel nach drei Wochen Versuchszeit. Auf die Oberfläche war eine dünne Schicht Silikonpaste (0,2 bis 1 mm dick) aufpoliert worden. Aufgrund der wasserabweisenden (hydrophoben) Eigenschaften der Beschichtung erscheinen die Meerwassertropfen als kleine Perlen. Ein Bewuchs ist nicht mehr zu erkennen.

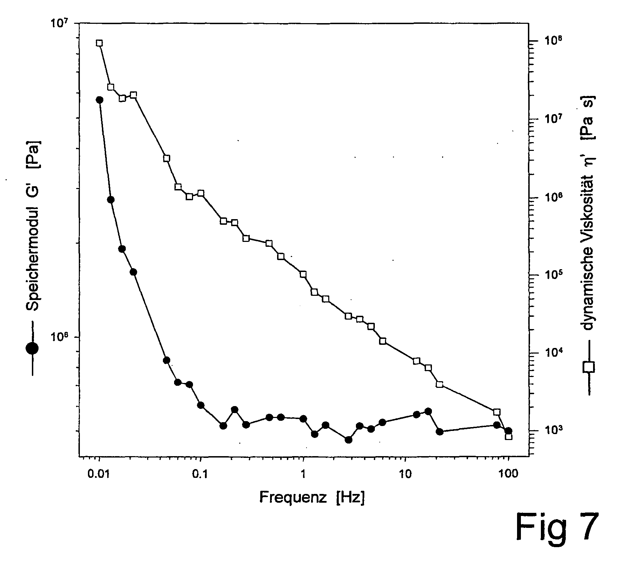

Die **Figur 7** zeigt das mechanische Spektrum (doppelt-logarithmische Darstellung) einer weichen Silikonpaste (ELBESIL BM, Fa. Böwing, Deutschland) nach einem Frequenzdurchgang mit ansteigender Frequenz von 0,01 bis 100 Hz (Scherspannung 15 Pa, Temperatur 20°C). Der exponentielle, nicht-lineare Abfall des Speichermoduls G' mit abfallender Frequenz korrelierte mit der Fließpunkt-Charakteristik der Deformationskurven (Figuren 2-5). Der Abfall der dynamischen Viskosität η' war dagegen annähernd linear. Die Abwesenheit einer nichtlinearen Viskositätskurve belegt, dass die Messungen im linear viskoelastischen Bereich durchgeführt wurden. Die Kurven zeigen weiterhin, dass eine innere induzierte Bewegung zur Erhöhung der Fließfähigkeit führt. Dieses Verhalten kann dazu genutzt werden, um bei der Schichtherstellung durch schnelle oszillierende Bewegung (z.B. Vibration) eine Glättung der Oberfläche zu erreichen und die Silikonschichten zu verkleinern. Dabei richtet sich die Dicke der Beschichtung nach der Oberflächenrauigkeit der zu beschichtenden Oberfläche und sollte deren Unregelmäßigkeiten ausgleichen. Weist zum Beispiel die Oberfläche einer Streamer-Kabeloberfläche eine laterale Rauigkeit von 20µm bis 50 µm auf, ist vorzugsweise eine Beschichtung in der Dicke von 50 µm vorzunehmen. Andere Schichtdicken sind möglich, denn die Wahl der Schichtdicke richtet auch nach der Langlebigkeit der Beschichtung, die bei Bewuchs als Verlustschicht wirkt, nach der Häufigkeit der mechanischen Verlagerung und nach dem Besiedlungsdruck.

Neben dem Silikon, beispielsweise Siloxan, können auch Fluoro- oder Hydrocarbon, beispielsweise Petrolatum, als Hauptkomponente eingesetzt werden. Im Folgenden werden einige Kompositionsbeispiele und die temperaturabhängig erreichbaren Fließpunkte angegeben. In der Praxis kann dann anhand der gezeigten Tabellen die richtige Zusammensetzung für den gewünschten Fließpunkt ausgewählt werden.

### a) Pasten mit polymerem Siloxan

| **Komposition** | | **Fließpunkt (Pa) bei** | | | |
|---|---|---|---|---|---|
| | | **Seewassertemperatur (°C)** | | | |
| | **5** | **10** | **20** | **30** | **45** |
| AK 100 + 5% H18 | 120 | 120 | 120 | 120 | 120 |
| AK 100 + 5% H20 RC | 90 | 90 | 90 | 90 | 90 |
| AK 300 + 10% HKSC | 200 | 200 | 200 | 200 | 200 |
| AK 300 + 15% HKSC | 450 | 450 | 450 | 450 | 450 |

Dabei werden in den Kompositionen folgende Zutaten verwendet:
AK 100/ 300 - Poly-Dimethyl-Siloxan-Öl (Fa. Wacker)
Elbesil BM/ BH - Silikonpasten (Fa. Böwing)

### b) Pasten mit polymerem Hydrocarbon

| **Komposition** | **Fließpunkt (Pa) bei** | | | | |
|---|---|---|---|---|---|
| | **Seewassertemperatur (°C)** | | | | |
| | **5** | **10** | **20** | **30** | **45** |
| Petrolatum | 110 | 90 | 15 | keiner | keiner |
| Petrolatum + Aerosil 200 | | | 32 | | |
| Petrolatum + 5% H18 | | | 30 | | |
| Petrolatum + 5% HKS C | | | 110 | | |
| Petrolatum +15% H18 | 900 | 750 | 300 | 30 | |
| Petrolatum + 15% HKS C | 600 | 450 | 250 | 90 | |
| Petrolatum + 20% HKS C | 1000 | 900 | 250 | 90 | |
| PWax-Paste | | 1900 | 700 | 210 | 70 |

Dabei werden in den Kompositionen folgende Zutaten verwendet:Dabei werden in den Kompositionen folgende Zutaten verwendet:
Petrolatum - medizinischer Grad DAB 8 (Fa. Riedel de Haen)
Aerosil 200 - hydrophobe Silika-Nanopartikel (Fa. Degussa)
H18 - Poly-Dimethyl-Siloxan-gebundene Silika-Nanopartikel (Fa. Wacker)
H20 RC - Alkyd-gebundene Silika-Nanopartikel (Fa. Wacker)
HKS C - Alkyd-gebundene Silika-Nanopartikel (Fa. Wacker)

Die Komposition der in der Tabelle genannten PWax-Paste ist folgende :

| | |
|---|---|
| 20.0 Teile | weißes Petrolatum, medizinischer Grad DAB 8 (Fa. Riedel de Haen) |
| 1,35 Teile | weißes Bienenwachs, medizinischer Grad |
| 1,50 Teile | Poly-Dimethyl-Siloxan-gebundene Silika-Nanopartikel H18 (Fa. Wacker) |
| 0,50 Teile | Alkyd-gebundene Silika-Nanopartikel HKS C (Fa. Wacker) |
| 0,50 Teile | Alkyd-gebundene Silika-Nanopartikel H20 RC (Fa. Wacker) |
| 1,00 Teile | simethische, anastase Form von Titanium-dioxid- Nanopartikeln, Eusolex T (Fa. Merck) |

Die einzelnen Komponenten werden auf eine Temperatur von 80°C aufgeheizt, gemischt und 2 Stunden mit einem Stator-Rotor- Mixer (Symex) gequirlt.

Silikonöle oder silikone Bienenwachse können bei solchen Pasten mit polymeren Hydrocarbonen, wie beispielsweise der PWax-Paste, eingesetzt werden, um die Temperaturabhängigkeit des Fließpunktes zu reduzieren. Die Verwendung von silikonen Bienenwachsen stellt eine einfache Methode dar, Silikone in die PWax-Paste einzubauen. Dabei ergibt sich eine hohe Stabilitätssicherheit und eine Verringerung des Ausblühens der Silikonöle. Weiterhin ist eine solche Komposition unkritisch für menschliche Haut, allerdings schlechter biologisch abbaubar im Vergleich zu einer Paste, die kein Silikon enthält.

Die Beschichtung einer wasserbenetzten Oberfläche mit der Paste kann durch Aufsprühen oder Polieren erfolgen. Wird die Paste aufpoliert, sind gleitende, rotierende oder vibrierende Bewegungen bevorzugt, weil Bewegung oberhalb des Fliesspunktes die Beschichtungspaste beweglicher macht. Dabei kann zum einfacheren Aufbringen die Paste zunächst mit einem Lösungsmittel vermischt werden, das schnell nach dem Aufbringen verdampft und die Funktionsfähigkeit der Paste nicht beeinflusst.

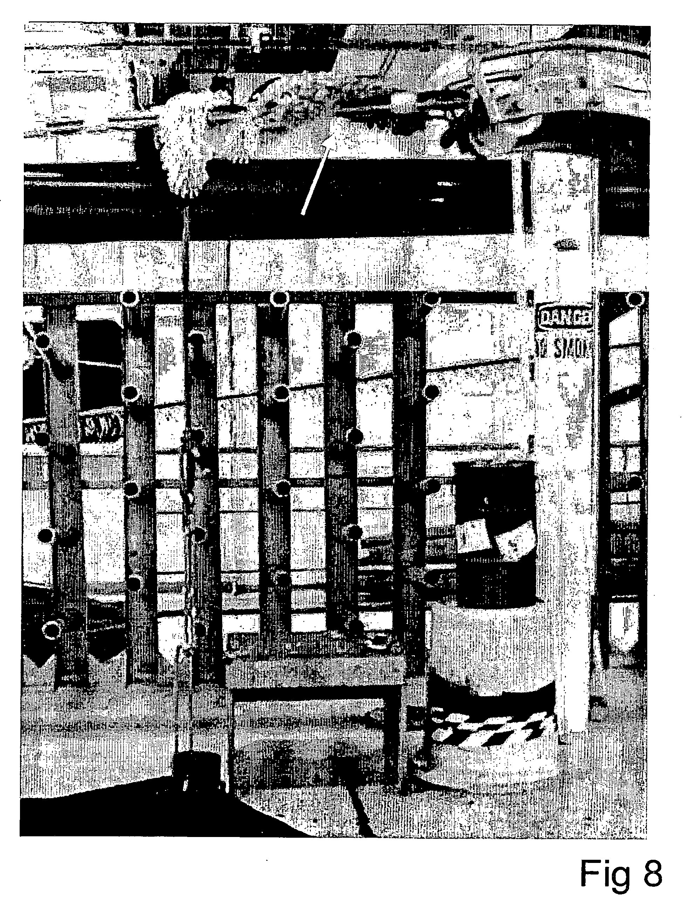

Der Prototyp eines Applikators ist in **Figur 8** dargestellt. Die gezeigte Bürstenform (weißer Pfeil) besteht aus einem vierzügigen Seil mit Manila-Fasern, das 1,5mal um das Messkabel gewickelt ist. Zur Politur wird Beschichtungspaste zwischen die Umwicklung gegeben und auf der Oberfläche des Messkabels grob verteilt, sodass während der Einholens und Auslegens des Messkabels die Paste fest auf die Oberfläche gedrückt wird. Das eine Ende dieser Bürste ist an einem Fixpunkt befestigt, während das andere Ende der Bürste mit einem Gewicht beschwert ist. Durch diese Anordnung wird erreicht, dass die Bürste immer eng am Kabel unabhängig von den Vertiefungen und Erhebungen des Kabels anliegt. Die erreichte Schichtdicke beträgt etwa 0,02 mm bis 1 mm. Die Menge an Beschichtungspaste, die für ein Messkabel mit einem Durchmesser von 6,4 cm benötigt wird, beträgt etwa 5 kg Beschichtungspaste auf 1 km Kabellänge. Andere Ausführungsformen, beispielsweise mit einer umlaufenden Ringbürste, sind ebenfalls möglich. Eine saubere und trockene Oberfläche erhöht die Effizienz des ersten Beschichtungsvorganges. Die wiederholte Beschichtung kann später auch unter Wasser vorgenommen werden, bevorzugt aber an trockenen Oberflächen.

Zur Beschichtung von zum Messkabel zugehörigen Gegenständen, wie beispielsweise Befestigungsmanschetten und Tiefen-Kontroll-Einheiten, wird die Beschichtungspaste mit einem Farbroller oder einem Tuch auf die trockenen Oberflächen verteilt und aufpoliert. Die nach der Erfindung beschichteten Oberflächen halten Bewuchs für etwa zwei Monate von der Ausrüstung fern, wobei zwei bis drei Auf- und Abspulvorgänge in diesem Zeitraum durchgeführt werden können. Muss die Beschichtung entfernt werden, so ist die Entfernung durch mechanische Behandlung möglich (z.B. unter Verwendung eines Hochdruckreinigers). In Bezug auf die Ausführung der Erfindung auf der Basis von Silikonen können auch Seifen (z.B. VP 840, Böwing, Germany) oder organische Lösungsmittel (z.B. Waschbenzin) verwendet werden.

## Patentansprüche

1. Verfahren zur Herstellung einer temporären, selbstreinigenden Beschichtung auf einem wasserbenetzten Bauteil, zum Beispiel einem Messkabel für Explorationszwecke, zu dessen Schutz gegen natürlichen Makrobewuchs durch Aufbringen einer viskoelastischen polymeren Beschichtungspaste, die lösungsmittelfrei und wasserabweisend ist,
**gekennzeichnet durch** Aufbringen einer Beschichtungspaste mit einer untoxischen Zusammensetzung und einem den Übergang vom festen zum fließenden Zustand festlegenden eingestellten Fließpunkt, der 5 Pa bis 2000 Pa größer als die Wandschubspannung des mit der Beschichtungspaste versehenen Bauteils in unbewachsenem Zustand ist, wobei die Einstellung des Fließpunkts in Abhängigkeit von den hydrodynamischen und biologischen Umgebungsbedingungen für das Bauteil **durch** die Wahl der Zusammensetzungsbasis und **durch** deren homogene Vermischung mit scherverzähenden Füllstoffen erfolgt.

2. Verfahren nach Anspruch 1,
**gekennzeichnet durch** Aufbringen einer Beschichtungspaste, deren eingestellter Fließpunkt 5 Pa bis 200 Pa größer als die Wandschubspannung des mit der Beschichtungspaste versehenen Bauteils in unbewachsenem Zustand ist.

3. Verfahren nach Anspruch 1 oder 2,
**gekennzeichnet durch** eine Stärke der Beschichtung, die nach der Höhe der Oberflächenrauigkeit und der mechanischen Belastung des zu beschichteten Bauteils, der angestrebten Lebensdauer der Beschichtung und/oder dem Bewuchsdruck gewählt ist.

4. Verfahren nach einem der Ansprüche 1 bis 3,
**gekennzeichnet durch** eine Stärke der Beschichtung zwischen 0,02 mm bis 5 mm.

5. Verfahren einem der Ansprüche 1 bis 4,
**gekennzeichnet durch** Einsetzen einer Beschichtungspaste mit Silikon, Fluorocarbon oder Hydrocarbon als Zusammensetzungsbasis.

6. Verfahren nach Anspruch 5,
**gekennzeichnet durch** Einsetzen einer Beschichtungspaste mit Silikonöl als flüssige Zusammensetzungsbasis.

7. Verfahren nach Anspruch 5,
**gekennzeichnet durch** Einsetzen einer Beschichtungspaste mit Petrolatum als Hydrocarbon.

8. Verfahren nach Anspruch 1,
**gekennzeichnet durch** eine Vermischung der Zusammensetzungsbasis mit Silika-, Metall- oder Metalloxid-Partikeln oder Partikeln oder Fasern aus biologischen Gerüstbausteinen als scherverzähendem Füllstoff.

9. Verfahren nach der Ansprüche 1 bis 8,
**gekennzeichnet durch** eine Beimengung von formgebenden Partikeln in die Beschichtungspaste.

10. Verfahren nach einem der Ansprüche 1 bis 9,
**gekennzeichnet durch** einen ersten Beschichtungsvorgang mittels Aufpolieren oder Aufsprühen der Beschichtungspaste auf das zu schützende Bauteil im trockenen und sauberen Zustand und im Bedarfsfall **durch** weitere oder erneute Beschichtungsvorgänge des vorbeschichteten Bauteils unter Wasser.

11. Verfahren nach Anspruch 10,
**gekennzeichnet durch** gleitende, vibrierende oder rotierende Elemente oder eine Kombination davon zum Aufpolieren oder Aufsprühen der Beschichtungspaste.

12. Anwendung des Verfahrens nach einem der Ansprüche 1 bis 11, auf ein Messkabel für Explorationszwecke als wasserbenetztem Bauteil.

## Claims

1. A method of producing a temporary self-cleaning coating on a water-wetted component such as a measuring cable for exploration purposes in order to protect it from macro growth by applying a viscoelastic polymeric coating paste which is solvent-free and water-repellent,
**characterised by** applying a coating paste having a non-toxic composition and a set flow point fixing the transition from the solid to the flowing state, which flow point is between 5 Pa and 2000 Pa higher than the wall shear stress of the component provided with the coating paste in its growth-free state, wherein setting the flow point is effected dependent upon the hydrodynamic and biological environmental conditions for the component by selecting the composition basis and by mixing the same homogenously with shear-toughening fillers.

2. Method according to claim 1, **characterised by** applying a coating paste the set flow point of which is between 5 Pa and 2000 Pa higher than the wall shear stress of the component provided with the coating paste in its growth-free state.

3. Method according to claim 1 or 2, **characterised by** a strength of the coating which is selected according to the level of the surface roughness and the mechanical stress of the component to be coated, the desired lifespan of the coating and/or the pressure from the growth.

4. Method according to one of claims 1 to 3, **characterised by** a strength of the coating lying between 0.02mm and 5mm.

5. Method according to one of claims 1 to 4, **characterised by** using a coating paste with silicone, fluorocarbon or hydrocarbon as a composition basis.

6. Method according to claim 5, **characterised by** using a coating paste with silicone oil as a liquid composition basis.

7. Method according to claim 5, **characterised by** using a coating paste with petrolatum as hydrocarbon.

8. Method according to claim 1, **characterised by** mixing the composition basis with silica, metal or metal oxide particles or with particles or fibres from biological scaffolding building blocks as a shear-toughening filler.

9. Method according to one of claims 1 to 8, **characterised by** adding formative particles to the coating paste.

10. Method according to one of claims 1 to 9, **characterised by** a first coating operation using polishing or spraying for applying the coating paste onto the component to be protected in a dry and clean state and, as necessary, by further or renewed coating operations of the precoated component under water.

11. Method according to claim 10, **characterised by** gliding, vibrating or rotating elements or a combination thereof in order to apply the coating paste through polishing or spraying.

12. Application of the method according to one of claims 1 to 11 to a measuring cable for exploration purposes as a water-wetted component.

## Revendications

1. Procédé pour fabriquer un revêtement temporaire et autonettoyant sur un composant humecté à l'eau, par exemple un câble de mesure pour des tâches d'exploration, qui est protégé contre des microsalissures naturelles par application d'une pâte de revêtement polymère viscoélastique, qui est exempte de solvant et hydrofuge,
**caractérisé par** l'application d'une pâte de revêtement comportant une composition non toxique et un point d'écoulement réglé définissant le passage de l'état solide à l'état liquide, qui est 5 Pa à 2000 Pa supérieur à la contrainte au cisaillement de paroi du composant doté de la pâte de revêtement dans l'état pâte de revêtement polymère viscoélastique, qui est exempt de solvant et hydrophobe,
**caractérisé par** l'application d'une pâte de revêtement comportant une composition non toxique et un point d'écoulement réglé qu'il soit de passage à l'état solide à liquide, qui est 5 Pa à 2000 Pa supérieur à la contrainte au cisaillement de paroi du composant doté de la pâte de revêtement dans l'état non sali, le réglage du point d'écoulement s'effectuant en fonction des conditions d'environnement hydrodynamiques et biologiques pour le composant par le choix de la base de composition et par son mélange homogène avec des agents de remplissage rendant difficile le cisaillement.

2. Procédé selon la revendication 1,
**caractérisé par** l'application d'une pâte de revêtement, dont le point d'écoulement réglé est 5 Pa à 200 Pa supérieur à la contrainte au cisaillement de paroi du composant doté de la pâte de revêtement dans l'état non sali.

3. Procédé selon la revendication 1 ou 2,
**caractérisé par** une épaisseur du revêtement, qui est choisie en fonction de la rugosité de surface et de la charge mécanique du composant à revêtir, de la durée de vie souhaitée du revêtement et/ou de la pression du salissement.

4. Procédé selon l'une quelconque des revendications 1 à 3,
**caractérisé par** une épaisseur du revêtement entre 0,02 mm et 5 mm.

5. Procédé selon l'une quelconque des revendications 1 à 4,
**caractérisé par** l'utilisation d'une pâte de revêtement avec du silicone, du fluorocarbone ou de l'hydrocarbone comme base de composition.

6. Procédé selon la revendication 5,
**caractérisé par** l'utilisation d'une pâte de revêtement avec de l'huile de silicone comme base de composition liquide.

7. Procédé selon la revendication 5,
**caractérisé par** l'utilisation d'une pâte de revêtement avec du petrolatum comme hydrocarbone.

8. Procédé selon la revendication 1,
**caractérisé par** un mélange de la base de composition avec des particules de silice, de métal ou d'oxyde de métal ou des particules ou des fibres à base d'élément de structure biologique comme agent de remplissage rendant difficile le cisaillement.

9. Procédé selon les revendications 1 à 8,
**caractérisé par** un mélange de particules de façonnage dans la pâte de revêtement.

10. Procédé selon l'une quelconque des revendications 1 ou 9,
**caractérisé par** une première opération de revêtement par polissage ou aspersion de la pâte de revêtement sur le composant à protéger dans l'état sec et propre et si nécessaire par d'autres opérations de revêtement ou des opérations de revêtement renouvelées du composant pré-enduit sous de l'eau.

11. Procédé selon la revendication 10,
**caractérisé par** des éléments glissants, vibrants ou rotatifs ou une combinaison de ces éléments pour le polissage ou l'aspersion de la pâte de revêtement.

12. Application du procédé selon l'une quelconque des revendications 1 à 11, à un câble de mesure pour des tâches d'exploration comme composant humecté à l'eau.
